# EUROPEAN PATENT APPLICATION

(11) **EP 2 869 173 A1**
(43) Date of publication of application: **06.05.2015**
(21) Application number: 13809217.6
(22) Date of filing: 06.03.2013
(51) Int. Cl.: G06F 3/048

(54) **HANDHELD ELECTRONIC DEVICE AND TOUCHSCREEN-BASED LIST ITEM EDITING METHOD**

(30) Priority: 29.06.2012 CN 201210224720
(71) Applicant: Huizhou TCL Mobile Communication Co., Ltd., Huizhou, Guangdong 516006 (CN)
(72) Inventor: DING, Yang, Huizhou Guangdong 516006 (CN)
(74) Representative: D'Halleweyn, Nele Veerle Trees Gertrudis
(86) International application number: PCT/CN2013/072213
(87) International publication number: WO 2014/000462

(57) **Abstract**

The present disclosure relates to a handhold electronic device and a method for editing list item based on a touch screen. The method comprises: transmitting a list-editing interface comprising at least one list item to a display screen for displaying; detecting a touch event input into an area of the touch screen that corresponds to the list item; performing a list-item editing operation on the list item according to the touch event so as to generate a list-item editing result; updating the list-editing interface according to the list-item editing result; and transmitting the updated list-editing interface to the display screen for displaying. With the above method, the present disclosure can simplify the operation and thereby improve the speed of editing list item.

## Description

### FIELD OF THE INVENTION

The present disclosure generally relates to the electronic field, and particularly to a handhold electronic device and a method for editing list item based on a touch screen.

### BACKGROUND OF THE INVENTION

Nowadays, handhold electronic devices such as mobile phones and personal digital assistants (PDAs) are widely used. As functions of the handhold electronic devices are becoming more and more powerful, the handhold electronic devices sometimes can take the place of personal computers to do some jobs in practical use, such as editing list items in lists. Lists are a kind of editing form most commonly used in display interfaces of the handhold electronic devices. The commonly-used lists comprise Excel list items or lists of other office software.

However, when performing an operation on the list items by using keys of a handhold electronic device, it requires users to select the list items one by one. For some commonly-used editing operations, e.g., an operation of deleting a list item, the users must press direction keys to select the corresponding list item and press the delete key to delete the list item. Consequently, the operation becomes complicated and cumbersome and cannot be done in a single step, which results in a low interaction speed.

### SUMMARY OF THE INVENTION

The main technical problem to be solved by the present disclosure is to provide a handhold electronic device and a method for editing list item based on a touch screen, which can simplify the operation of editing list item to improve the speed of editing list item.

To solve the aforesaid technical problem, a technical solution adopted by the present disclosure is to provide a method for editing list item based on a touch screen, which comprises the following steps of: a. transmitting a list-editing interface comprising at least one list item to a display screen for displaying; b. detecting a touch event input into an area of the touch screen that corresponds to the list item; c. performing a list-item editing operation on the list item according to the touch event so as to generate a list-item editing result; d. updating the list-editing interface according to the list-item editing result; and e. transmitting the updated list-editing interface to the display screen for displaying; wherein a list in which the list item is located is a single-row list, and the list-item editing operation comprises an operation of adding a list item, an operation of deleting a list item, an operation of selecting a list item, an operation of deselecting a selected list item, and an operation of moving a list item.

To solve the aforesaid technical problem, another technical solution adopted by the present disclosure is to provide a method for editing list item based on a touch screen, which comprises the following steps of: a. transmitting a list-editing interface comprising at least one list item to a display screen for displaying; b. detecting a touch event input into an area of the touch screen that corresponds to the list item; c. performing a list-item editing operation on the list item according to the touch event so as to generate a list-item editing result; d. updating the list-editing interface according to the list-item editing result; and e. transmitting the updated list-editing interface to the display screen for displaying.

The list item is a single-row list item.

The touch event in the step b comprises: a single-point down-drag event, wherein the distance by which the single point is dragged down in the single-point down-drag event is larger than a first predetermined distance; a single-point up-drag event, wherein the distance by which the single point is dragged up in the single-point up-drag event is larger than a second predetermined distance; a two-points reverse-drag event, wherein the distance by which either of the two points is dragged reversely in the two-points reverse-drag event is larger than a third predetermined distance; a single-point right-drag event, wherein the distance by which the single point is dragged to the right in the single-point right-drag event is larger than a fourth predetermined distance; and a single-point left-drag event, wherein the distance by which the single point is dragged to the left in the single-point left-drag event is larger than a fifth predetermined distance; wherein the single point is a contact point where a single finger of a user touches the area of the touch screen, and the two points are contact points where two fingers of the user touch the area of the touch screen respectively.

The list-item editing operation comprises: an operation of adding a list item; an operation of deleting a list item; an operation of selecting a list item; an operation of deselecting a selected list item; and an operation of moving a list item.

To solve the aforesaid technical problem, yet another technical solution adopted by the present disclosure is to provide a handhold electronic device. The handhold electronic device is provided with a touch screen and a display screen and comprises: a display module, configured to transmit a list-editing interface comprising at least one list item to the display screen for display; a gesture recognition module, configured to detect a touch event input into an area on the touch screen that corresponds to the list item; a list-item editing module, configured to perform a list-item editing operation on the list item according to the touch event so as to generate a list-item editing result; and a list-item updating module, configured to update the list-editing interface according to the list-item editing result.

The display module is further configured to transmit the updated list-editing interface to the display screen for display.

A list in which the list item is located is a single-row list.

The touch event comprises: a single-point down-drag event, wherein the distance by which the single point is dragged down in the single-point down-drag event is larger than a first predetermined distance; a single-point up-drag event, wherein the distance by which the single point is dragged up in the single-point up-drag event is larger than a second predetermined distance; a two-points reverse-drag event, wherein the distance by which either of the two points is dragged reversely in the two-points reverse-drag event is larger than a third predetermined distance; a single-point right-drag event, wherein the distance by which the single point is dragged to the right in the single-point right-drag event is larger than a fourth predetermined distance; and a single-point left-drag event, wherein the distance by which the single point is dragged to the left in the single-point left-drag event is larger than a fifth predetermined distance; wherein the single point is a contact point where a single finger of a user touches the area of the touch screen, and the two points are contact points where two fingers of the user touch the area of the touch screen respectively.

The list-item editing operation comprises: an operation of adding a list item; an operation of deleting a list item; an operation of selecting a list item; an operation of deselecting a selected list item; and an operation of moving a list item.

As compared to the prior art, the present disclosure has the following benefits: the present disclosure edits the list item by detecting the touch event input into an area on the touch screen that corresponds to the list item, performing the list-item editing operation on the list item according to the touch event so as to generate a list-item editing result, and further updating the list-editing interface according to the list-item editing result, so the operation of editing list item is simplified and, thereby, the speed of editing list item is improved.

### BRIEF DESCRIPTION OF THE DRAWINGS

**FIG. 1** is a flowchart diagram of a method for editing list item based on a touch screen according to an embodiment of the present disclosure;
**FIG. 2** is a schematic view illustrating a first change of an interface during an operation of adding a list item;
**FIG. 3** is a schematic view illustrating a second change of an interface during the operation of adding a list item;
**FIG. 4** is a schematic view illustrating a third change of an interface during the operation of adding a list item;
**FIG. 5** is a schematic view illustrating a change of an interface during an operation of selecting a list item;
**FIG. 6** is a schematic view illustrating a change of an interface during an operation of deselecting the selected list item;
**FIG. 7** is a schematic view illustrating a change of an interface during an operation of deleting a list item; and
**FIG. 8** is a schematic structural view of a handhold electronic device according to an embodiment of the present disclosure.

### DETAILED DESCRIPTION OF THE INVENTION

Hereinbelow, the present disclosure will be detailed with reference to the attached drawings and embodiments thereof.

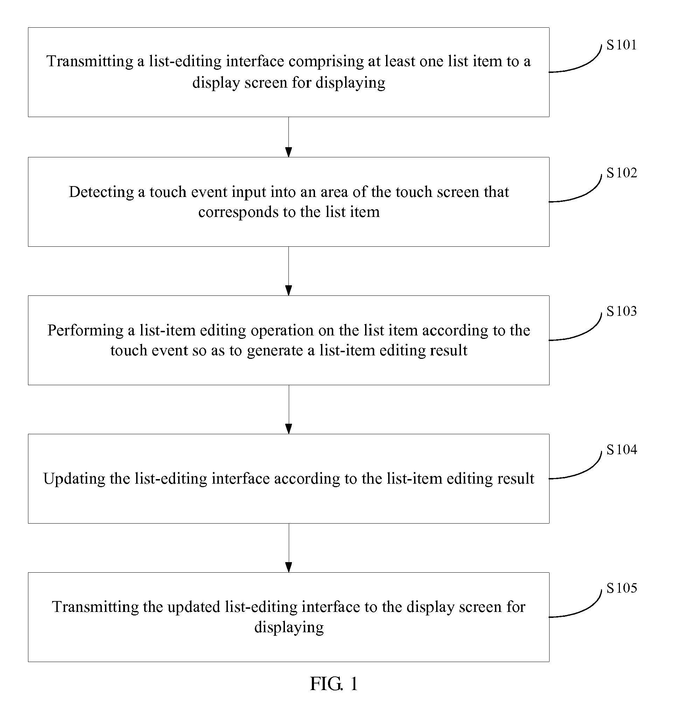

Referring to **FIG. 1**, **FIG. 1** is a flowchart diagram of a method for editing list item based on a touch screen according to an embodiment of the present disclosure. The method comprises following steps:
**S101:** transmitting a list-editing interface comprising at least one list item to a display screen for displaying.

In this embodiment, a list in which the list item is located, is a single-row list, but the list in which the list item is located may also be a multi-row list in other embodiments of the present disclosure, and the present disclosure is not limited in this. Furthermore, the list-editing interface is an interface for displaying the list.

**S102:** detecting a touch event input into an area of the touch screen that corresponds to the list item.

The touch event refers to a touch operation generated on the area of the touch screen by one or more fingers. In this embodiment, the touch event comprises: a single-point up-drag event, a single-point down-drag event, a two-points reverse-drag event, a single-point right-drag event and a single-point left-drag event.

In detail, in the single-point down-drag event, a distance by which a single point is dragged down, is larger than a first predetermined distance. In the single-point up-drag event, a distance by which the single point is dragged up, is larger than a second predetermined distance. In the two-points reverse-drag event, a distance by which either of two points is dragged reversely, is larger than a third predetermined distance. In the single-point right-drag event, a distance by which the single point is dragged to the right, is larger than a fourth predetermined distance. In the single-point left-drag event, a distance by which the single point is dragged to the left, is larger than a fifth predetermined distance.

The single point is a contact point where a single finger of a user touches the area of the touch screen, and the two points are contact points where two fingers of the user touch the area of the touch screen respectively. The first predetermined distance, the second predetermined distance, the third predetermined distance, the fourth predetermined distance, and the fifth predetermined distance described above can be defined depending on using habits of users.

**S103:** performing a list-item editing operation on the list item according to the touch event so as to generate a list-item editing result.

In detail, after the touch event is detected, a corresponding list-item editing operation is performed according to the touch event. The list-item editing operation comprises: an operation of adding a list item; an operation of deleting a list item; an operation of selecting a list item; an operation of deselecting a selected list item; and an operation of moving a list item.

The corresponding relationship between the touch event and the list-item editing operation may be defined as shown in following table:

| | |
|---|---|
| Single-point down-drag event | Operation of adding a list item |
| Single-point up-drag event | Operation of adding a list item |
| Two-point reverse-drag event | Operation of adding a list item |
| Single-point right-drag event | Operation of deleting a list item |
| Single-point left-drag event | Operation of selecting a list item/Operation of deselecting the selected list item |

As shown in the above table, the operation of adding a list item is performed when the single-point down-drag event, the single-point up-drag event and the two-points reverse-drag event are detected.

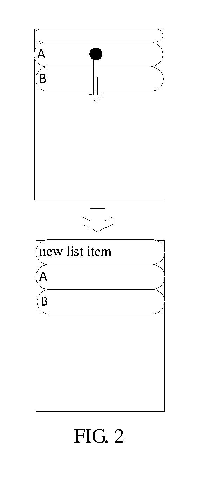

In detail, referring to **FIG. 2, FIG. 2** is a schematic view illustrating a first change of an interface during the operation of adding a list item. As shown in **FIG. 2****,** if the touch event is determined to be a single-point down-drag event, a new list item may be added above a list item **A** when the distance by which the single point is dragged down is larger than the first predetermined distance.

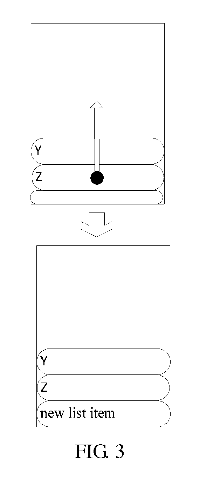

Referring to **FIG. 3, FIG. 3** is a schematic view illustrating a second change of an interface during the operation of adding a list item. As shown in **FIG. 3****,** if the touch event is determined to be a single-point up-drag event, a new list item may be added below a list item **Z** when the distance by which the single point is dragged up is larger than the second predetermined distance.

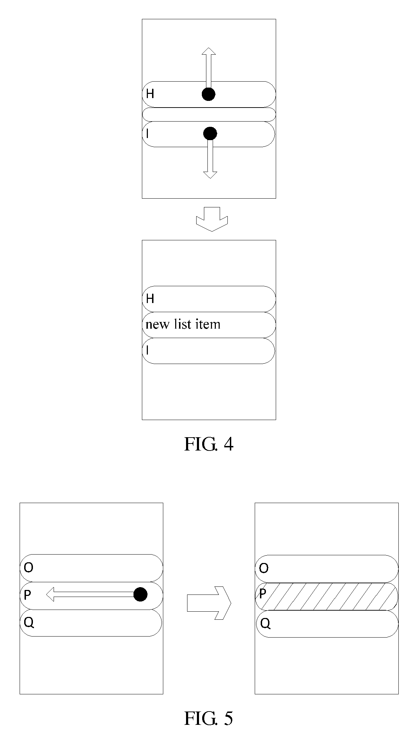

Referring to **FIG. 4, FIG. 4** is a schematic view illustrating a third change of an interface during the operation of adding a list item. As shown in **FIG. 4****,** if the touch event is determined to be a two-points reverse-drag event, a new list item may be added between a list item **H** and a list item **Z** when the distance by which either of the two points is dragged reversely is larger than the third predetermined distance.

Referring to **FIG. 5, FIG. 5** is a schematic view illustrating a change of an interface during the operation of selecting a list item. As shown in **FIG. 5****,** if the touch event is determined to be a single-point left-drag event and the distance by which the single point is dragged to the left is larger than the fifth predetermined distance, the operation of selecting a list item is performed, that is, the list item **P** is selected.

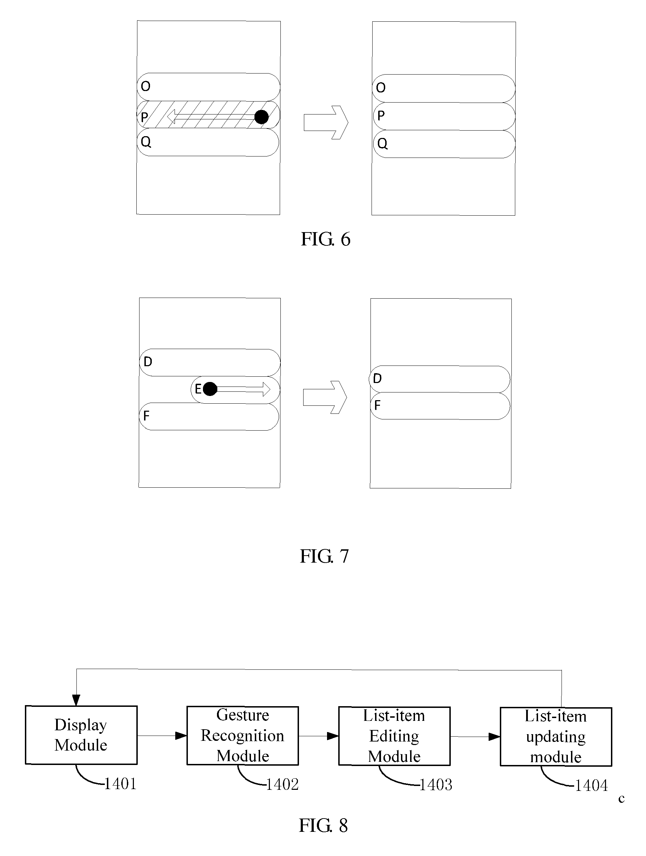

Referring to **FIG. 6, FIG. 6** is a schematic view illustrating a change of an interface during the operation of deselecting a selected list item. As shown in **FIG. 6****,** if the list item **P** has been selected, the operation of deselecting the selected list item, i.e., deselecting the list item **P** is performed.

Referring to **FIG. 7, FIG. 7** is a schematic view illustrating a change of an interface during the operation of deleting a list item. As shown in **FIG. 7****,** if the touch event is determined to be a single-point right-drag event and the distance by which the single point is dragged to the right is larger than the fourth predetermined distance, the operation of deleting a list item is performed, that is, the list item **E** is deleted.

It should be noted that, the corresponding relationship between the touch event and the list-item editing operation described above is only a preferred implementation of the present disclosure. The aforesaid corresponding relationship may also be adjusted depending on the practical needs in practical applications, and the present disclosure has no specific limitation thereon.

The corresponding relationship described above can be defined in programming, and the present disclosure has no limitation thereon.

**S104:** updating the list-editing interface according to the list-item editing result.

After the list-item editing operation is performed, a new list-editing interface is generated according to the obtained list-item editing result, and the new list-editing interface is different from the list-editing interface being displayed.

**S105:** transmitting the updated list-editing interface to the display screen for displaying.

The aforesaid updating action runs in the background, so it needs to be transmitted to the display screen for displaying, so as to inform the user of the new list-editing interface generated after the list-item editing operation.

It should be noted that, in alternative embodiments of the present disclosure, before determining the touch event, it may be further determined whether the corresponding item list on the area of the touch screen that corresponds to the touch action is selected and is at the topmost of the list. If the list item is selected and is at the topmost of the list, a corresponding operation of adding a list item (above or below the list item) is performed after the touch event is determined to be a single-point down-drag event or a single-point up-drag event. If the list item is selected but is not at the topmost of the list, the list item will be dragged down or dragged up for display (based on whether the touch event is a single-point down-drag event or a single-point up-drag event). If the list item is not selected, an operation of moving the list item will be performed. During the operation of moving a list item, the list item is moved to a position where the touch action ends on the touch screen if the distance by which the single point is dragged is larger than the first predetermined distance or the second predetermined distance.

Referring to **FIG. 8, FIG. 8** is a schematic structural view of a handhold electronic device according to an embodiment of the present disclosure. As shown in **FIG. 8****,** the handhold electronic device of the present disclosure comprises a display module **1401,** a gesture recognition module **1402,** a list-item editing module **1403,** and a list-item updating module **1404.**

The display module **1401** is configured to transmit a list-editing interface comprising at least one list item to the display screen for display. The gesture recognition module **1402** is configured to detect a touch event input into an area of the touch screen that corresponds to the list item. The list-item editing module **1403** is configured to perform a list-item editing operation on the list item according to the touch event so as to generate a list-item editing result. The list-item updating module **1404** is configured to update the list-editing interface according to the list-item editing result. The display module **1401** is further configured to transmit the updated list-editing interface to the display screen for display.

Specific implementations of the individual modules of the handhold electronic device described above have been described in detail in the embodiment shown in **FIG. 1****,** and thus will not be further described herein.

With the technical solutions described above, the present disclosure edits the list item by detecting the touch event input into an area of the touch screen that corresponds to the list item, performing the list-item editing operation on the list item according to the touch event so as to generate a list-item editing result, and further updating the list-editing interface according to the list-item editing result. As a result, the operation of editing list item is simplified and, thereby, the speed of editing list item is improved.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A method for editing list item based on a touch screen, comprising following steps of:
a. transmitting a list-editing interface comprising at least one list item to a display screen for displaying;
b. detecting a touch event input into an area of the touch screen that corresponds to the list item;
c. performing a list-item editing operation on the list item according to the touch event so as to generate a list-item editing result;
d. updating the list-editing interface according to the list-item editing result; and
e. transmitting the updated list-editing interface to the display screen for displaying; wherein a list in which the list item is located, is a single-row list, and the list-item
editing operation comprises an operation of adding a list item, an operation of deleting a list item, an operation of selecting a list item, an operation of deselecting a selected list item, and an operation of moving a list item.

2. The method of claim 1, wherein the touch event in the step b comprises:
a single-point down-drag event, wherein a distance by which a single point is dragged down in the single-point down-drag event is larger than a first predetermined distance;
a single-point up-drag event, wherein a distance by which the single point is dragged up in the single-point up-drag event is larger than a second predetermined distance;
a two-points reverse-drag event, wherein a distance by which either of two points is dragged reversely in the two-points reverse-drag event is larger than a third predetermined distance;
a single-point right-drag event, wherein a distance by which the single point is dragged to the right in the single-point right-drag event is larger than a fourth predetermined distance; and
a single-point left-drag event, wherein a distance by which the single point is dragged to the left in the single-point left-drag event is larger than a fifth predetermined distance;
wherein the single point is a contact point where a single finger of a user touches the area of the touch screen, and the two points are contact points where two fingers of the user touch the area of the touch screen respectively.

3. A method for editing list item based on a touch screen, comprising following steps of:
a. transmitting a list-editing interface comprising at least one list item to a display screen for displaying;
b. detecting a touch event input into an area of the touch screen that corresponds to the list item;
c. performing a list-item editing operation on the list item according to the touch event so as to generate a list-item editing result;
d. updating the list-editing interface according to the list-item editing result; and
e. transmitting the updated list-editing interface to the display screen for displaying.

4. The method of claim 3, wherein a list in which the list item is located, is a single-row list.

5. The method of claim 3, wherein the touch event in the step b comprises:
a single-point down-drag event, wherein a distance by which a single point is dragged down in the single-point down-drag event is larger than a first predetermined distance;
a single-point up-drag event, wherein a distance by which the single point is dragged up in the single-point up-drag event is larger than a second predetermined distance;
a two points reverse drag event, wherein a distance by which either of two points is dragged reversely is larger than a third predetermined distance;
a single-point right-drag event, wherein a distance by which the single point is dragged to the right in the single-point right-drag event is larger than a fourth predetermined distance; and
a single-point left-drag event, wherein a distance by which the single point is dragged to the left in the single-point left-drag event is larger than a fifth predetermined distance;
wherein the single point is a contact point where a single finger of a user touches the area of the touch screen, and the two points are contact points where two fingers of the user touch the area of the touch screen respectively.

6. The method of claim 3, wherein the list-item editing operation comprises:
an operation of adding a list item;
an operation of deleting a list item;
an operation of selecting a list item;
an operation of deselecting a selected list item; and
an operation of moving a list item.

7. A handhold electronic device, being provided with a touch screen and a display screen, and comprising:
a display module, configured to transmit a list-editing interface comprising at least one list item to the display screen for displaying;
a gesture recognition module, configured to detect a touch event input into an area of the touch screen that corresponds to the list item;
a list-item editing module, configured to perform a list-item editing operation on the list item according to the touch event so as to generate a list-item editing result; and
a list-item updating module, configured to update the list-editing interface according to the list-item editing result;
wherein the display module is further configured to transmit the updated list-editing interface to the display screen for displaying.

8. The handhold electronic device of claim 7, wherein a list in which the list item is located, is a single-row list.

9. The handhold electronic device of claim 7, wherein the touch event comprises:
a single-point down-drag event, wherein a distance by which a single point is dragged down in the single-point down-drag event is larger than a first predetermined distance;
a single-point up-drag event, wherein a distance by which the single point is dragged up in the single-point up-drag event is larger than a second predetermined distance;
a two points reverse drag event, wherein a distance by which either of two points is dragged reversely is larger than a third predetermined distance;
a single-point right-drag event, wherein a distance by which the single point is dragged to the right in the single-point right-drag event is larger than a fourth predetermined distance; and
a single-point left-drag event, wherein a distance by which the single point is dragged to the left in the single-point left-drag event is larger than a fifth predetermined distance;
wherein the single point is a contact point where a single finger of a user touches the area of the touch screen, and the two points are contact points where two fingers of the user touch the area of the touch screen respectively.

10. The handhold electronic device of claim 7, wherein the list-item editing operation comprises:
an operation of adding a list item;
an operation of deleting a list item;
an operation of selecting a list item;
an operation of deselecting a selected list item; and
an operation of moving a list item.
